# EUROPÄISCHE PATENTSCHRIFT

(11) **EP 2 803 975 B1**
(45) Veröffentlichungstag und Bekanntmachung des Hinweises auf die Patenterteilung: **08.07.2015**
(21) Anmeldenummer: 13168237.9
(22) Anmeldetag: 17.05.2013
(51) Int. Cl.: G01N 21/35, G01J 3/433, G01N 21/27, G01N 21/39, G01J 3/42

(54) **Verfahren zur Laserspektroskopie von Gasen**
Method for laser spectroscopy of gases
Procédé destiné à la spectroscopie laser de gaz

(43) Veröffentlichungstag der Anmeldung: 19.11.2014
(73) Patentinhaber: SICK AG, 79183 Waldkirch/Breisgau (DE)
(72) Erfinder: Edler, Julian, 79312 Emmendingen (DE); Beyer, Thomas, 79111 Freiburg (DE); Disch, Rolf, 79356 Eichstetten (DE)
(74) Vertreter: Manitz, Finsterwald & Partner GbR

(56) Entgegenhaltungen:
- US-A1- 2008 225 296
- US-B1- 7 969 576

## Beschreibung

Die Erfindung betrifft ein Verfahren zur Bestimmung einer Konzentration eines Gases in einer Probe und/oder der Zusammensetzung eines Gases, mittels eines Spektrometers. Das Verfahren umfasst das Aussenden von Strahlung, das Messen eines Absorptionssignals, das Umwandeln des Absorptionssignals in ein Derivativsignal, das Ableiten einer Gaskonzentrationsmessgröße aus dem Derivativsignal sowie das Bestimmen der Konzentration und/oder Zusammensetzung des Gases aus der Gaskonzentrationsmessgröße.

Zur Untersuchung einer Gasprobe auf ihre Zusammensetzung und insbesondere auf die Konzentration eines bestimmten Gases der Probe hin ist es bekannt, diese Informationen mittels Spektroskopie anhand der spezifischen Absorption von Strahlung wie etwa Licht durch verschiedene Gase bzw. Gasgemische abzuleiten. Typischerweise werden hierzu Laserspektrometer verwendet, bei denen das Licht eines Lasers durch die Probe gestrahlt wird, die sich beispielsweise in einem Messraum, etwa einer Messzelle, befindet oder durch einen Messraum hindurchgeleitet wird. Bei bekannter Ausdehnung der Probe in Laserausbreitungsrichtung (Ausdehnung des Messraums) kann gemäß dem Lambert-Beerschen Gesetz der von der Wellenlänge des eingestrahlten Laserlichts abhängige Absorptionskoeffizient bestimmt werden. Aus dem Vergleich eines so gewonnenen Absorptionsspektrums mit für verschiedene Gase bekannten Spektren kann auf die Konzentration eines Gases bzw. dessen Anteil an der Probe geschlossen werden.

Verschiedene Gase weisen verschiedene typische Wellenlängen auf, bei denen sie besonders stark absorbieren. Die entsprechenden Maxima im Absorptionsspektrum, die Minima im Transmissionsspektrum entsprechen, sind idealerweise scharfe Absorptionslinien. Aufgrund der Unschärferelation, des Drucks des Gases sowie des temperaturabhängigen Dopplereffekts sind reale Absorptionslinien jedoch verbreitert zu einer bestimmten Absorptionslinienform. Diese weist in der Regel im Wesentlichen ein Voigt-Profil auf, das sich bei Faltung einer Gauß-Kurve, die typisch für eine temperaturabhängige Dopplerverbreiterung ist, mit einer Lorentz-Kurve ergibt, deren Breite typischerweise druckabhängig ist.

Für die Messung einer oder mehrerer solcher Absorptionslinien in einem Absorptionsspektrum wird daher ein ganzer Wellenlängenbereich untersucht, indem beispielsweise der Laser des Spektrometers eine lineare Wellenlängenrampe durchläuft. Dabei kann die lineare Rampe auch Teil einer Sägezahn- oder Dreiecksfunktion sein, um denselben Wellenlängenbereich mehrmals zu durchlaufen. Der Wellenlängenbereich wird so gewählt, dass eine oder mehrere Absorptionslinien des zu untersuchenden Gases von ihm umfasst werden. Es kann auch vorgesehen sein, mehrere disjunkte Wellenlängenbereiche zu durchlaufen, um verschiedene Absorptionslinien desselben Gases und/oder verschiedener Gase der Probe zu erfassen.

Eine Erweiterung dieser direkten Spektroskopie stellt die Wellenlängen-Modulations-Spektroskopie dar, bei der das im Wesentlichen kontinuierliche Durchlaufen des Wellenlängenbereichs von einer demgegenüber schnellen Modulation der Wellenlänge überlagert wird. Typischerweise ist diese Wellenlängenmodulation sinusförmig mit einer fest vorgegebenen Modulationsfrequenz. Die Wellenlängenmodulation kann aber von einem harmonischen Verlauf abweichen, da ein realer Laser die beispielsweise als moduliertes Strom- oder Spannungssignal vorgegebene Modulation in der Regel nicht perfekt in eine Modulation der Wellenlänge umsetzt. Da das Absorptionsspektrum wie eine Übertragungsfunktion wirkt, wird die Wellenlängenmodulation des Laserlichts aufgrund der Absorption durch die Probe in ein entsprechend moduliertes Absorptionssignal umgewandelt, das vom Spektrometer aufgezeichnet wird.

Zur Auswertung werden aus dem modulierten Absorptionssignal die Anteile bei der Modulationsfrequenz und bei ganzzahligen Vielfachen der Modulationsfrequenz bestimmt. Dies kann beispielsweise mit phasensensitiven Verstärkern, typischerweise Lock-In-Verstärkern, erfolgen oder durch eine rechnerische Verarbeitung etwa mittels einer Fourier-Zerlegung. Die so bestimmten Signale, die für jede Wellenlänge den Anteil des modulierten Absorptionssignals bei der Modulationsfrequenz oder bei einem Vielfachen der Modulationsfrequenz angeben, werden auch Derivativsignale genannt, da sie im Wesentlichen, d.h. insbesondere für den Grenzfall kleiner Modulationsamplituden, den (mathematischen) Ableitungen des Absorptionsspektrums entsprechen. Der Anteil bei der Modulationsfrequenz selbst entspricht dabei der ersten Ableitung und wird auch 1f-Signal genannt, der Anteil bei der zweifachen Modulationsfrequenz wird 2f-Signal genannt und entspricht der zweiten Ableitung usw.

Aufgrund dieses Zusammenhangs enthalten die Derivativsignale im Wesentlichen dieselbe Information, die auch im direkten Absorptionssignal enthalten ist, so dass die Gaskonzentration bzw. die Probenzusammensetzung auch aus einem jeweiligen Derivativsignal bestimmt werden kann. Der Vorteil der Verwendung der Derivativsignale besteht dabei darin, dass die zu bestimmende Information in höhere Frequenzbereiche verschoben werden kann, in denen das Signal-zu-Rausch-Verhältnis in der Regel besser ist als in niedrigen Frequenzbereichen. Außerdem können durch die Derivativsignale Hintergrundsignale, die als abzuziehende Grundlinien das Absorptionsspektrum verfälschen, zum Teil eliminiert werden. Im 1f-Signal ist beispielsweise der Einfluss eines konstanten Offsets beseitigt, im 2f-Signal der Einfluss beliebiger linearer Grundlinien, usw. Je höher der Grad des Derivativsignals, desto komplexere Grundlinien werden aus dem Signal herausgefiltert, desto geringer wird aber auch die Signalintensität. Aus diesem Grund wird typischerweise das 2f-Signal als guter Kompromiss zwischen den Vor- und Nachteilen höherer Ableitungen zur Auswertung herangezogen. Aus dem Derivativsignal kann dann eine Gaskonzentrationsmessgröße abgeleitet werden, die ein Maß für die Konzentration und/oder Zusammensetzung des Gases ist.

In US 7969576 B1 wird ein Verfahren mit den Merkmalen des Oberbegriffs des Anspruchs 1 beschrieben.

Ein Verfahren zur Gasanalyse mit Laser-Spektroskopie nach dem Prinzip der Wellenlängen-Modulations-Spektroskopie ist in der EP 1 873 513 A2 beschrieben. Darin wird insbesondere dargestellt, wie im Zuge der Signalauswertung aus dem 2f-Signal eines Absorptionsspektrums Rückschlüsse auf Größen wie etwa die Konzentration eines Gases gezogen werden können. Ferner wird beschrieben, dass bei dem Bestimmen der Gaskonzentration veränderliche Randbedingungen, beispielsweise Änderungen von Zustandsgrößen des Gases wie Druck, Temperatur und Fremdgaseinflüsse, durch Faktoren berücksichtigt werden können, die im Zuge einer Kalibrierung bestimmt werden.

Eine derartige Kalibrierung kann sehr aufwändig sein, da für möglichst viele in Frage kommende Kombinationen der veränderlichen Parameter deren jeweiliger verfälschender Einfluss auf die Gaskonzentrationsmessgröße bestimmt werden muss. Zudem kann sich das Ausmaß der Verfälschung insbesondere bei Parametern, die Geräteeigenschaften betreffen, mit der Zeit verändern, so dass das Kalibrieren zur Anpassung an die veränderten Einflüsse regelmäßig wiederholt werden muss.

Die Gaskonzentrationsmessgröße kann jedoch nicht nur von der Gaskonzentration selbst sowie den genannten verfälschenden Einflüssen, sondern insbesondere auch von der gewählten Wellenlängenmodulation abhängig sein. Es ist daher bekannt, die Amplitude der Wellenlängenmodulation derart anzupassen, dass verfälschende Einflüsse, insbesondere des Drucks des Gases, auf die Gaskonzentrationsmessgröße bereits bei der Messung und nicht erst im Zuge einer nachgelagerten Auswertung kompensiert werden.

Beispielsweise schlägt die EP 2 520 925 A1 vor, für einen bestimmten Druckbereich im Zuge einer Kalibrierung diejenige Amplitude der Wellenlängenmodulation zu bestimmen und anschließend bei der Messung zu verwenden, bei der der Einfluss des Drucks auf die Gaskonzentrationsmessgröße so gering ist, dass er im Wesentlichen vernachlässigt werden kann. In der WO 2008/112955 A1 wird ein Spektrometer für die Wellenlängen-Modulations-Spektroskopie beschrieben, das einen Drucksensor zum Messen des aktuellen Drucks des Gases umfasst und bei dem die Amplitude der Wellenlängenmodulation in Abhängigkeit von dem gemessenen Druck angepasst wird. Die Amplitude wird dabei gerade so verändert, dass der Einfluss des Drucks auf die Gaskonzentrationsmessgröße kompensiert wird. Diese Verfahren sind jedoch insofern vergleichsweise aufwändig, als ein gesondertes Kalibrierverfahren zur Bestimmung der optimalen Modulationsamplitude durchgeführt werden muss bzw. das Spektrometer einen Drucksensor zur Bestimmung des Drucks der Probe umfassen muss.

Es ist daher eine Aufgabe der Erfindung, ein Verfahren zur Bestimmung einer Konzentration eines Gases in einer Probe und/oder der Zusammensetzung eines Gases in einer Probe mittels eines Spektrometers zu schaffen, bei dem auf einfache und kostengünstige Weise, insbesondere unabhängig von einem gesonderten Drucksensor, von Fremdgaseinflüssen und von der Konzentration des zu messenden Gases, der verfälschende Einfluss einer Zustandsgröße des Gases bereits bei der Messung kompensiert werden kann.

Diese Aufgabe wird durch ein Verfahren mit den Merkmalen des Anspruchs 1 gelöst Bevorzugte Weiterbildungen sind Gegenstand von Unteransprüchen.

Unter Gaskonzentrationsmessgrößen sind dabei Werte zu verstehen, die aus jeweiligen Derivativsignalen abgeleitet werden können, beispielsweise indem sie eine Fläche oder ein ähnliches an den Derivativsignalen bestimmbares Maß angeben, und die als Messgrößen Information über die zu messende Gaskonzentration und/oder die zu messende Zusammensetzung des Gases enthalten. Die Gaskonzentrationsmessgrößen sind die Konzentration des Gases widerspiegelnde Messgrößen. Das Bestimmen der Gaskonzentration kann dabei das Bestimmen der Gaskonzentration in einer Probe bedeuten, was auch das Bestimmen der Konzentration einer Gaskomponente in einem Gas bzw. das Bestimmen der Zusammensetzung eines Gases begrifflich einschließen soll.

Die erste Gaskonzentrationsmessgröße und die zweite Gaskonzentrationsmessgröße können auf dieselbe oder auf verschiedene Weise aus dem ersten bzw. dem zweiten Derivativsignal abgeleitet sein. Beispielsweise kann es sich bei der ersten und bei der zweiten Gaskonzentrationsmessgröße um eine Höhe, einen Abstand, eine Breite oder eine Fläche des jeweiligen Derivativsignals handeln oder es kann sich bei der ersten Gaskonzentrationsmessgröße z.B. um eine Höhe des ersten Derivativsignals und bei der zweiten Gaskonzentrationsmessgröße z.B. um eine Fläche des zweiten Derivativsignals handeln.

Der Ausdruck "erstes Derivativsignal" ist dabei nicht auf das Derivativsignal, das der ersten Ableitung des Absorptionssignals entspricht (1f-Signal) eingeschränkt, sondern kann irgendeines der Derivativsignale (1f, 2f, usw.) bezeichnen. Gleiches gilt für den Ausdruck "zweites Derivativsignal", der nicht auf das 2f-Signal eingeschränkt zu verstehen ist. Bevorzugt handelt es sich allerdings bei dem zweiten Derivativsignal um ein anderes als das erste Derivativsignal.

Bei dem erfindungsgemäßen Verfahren wird also nicht die Zustandsgröße des Gases, die sich verfälschend auf die Gaskonzentrationsmessgröße auswirkt, direkt überwacht, um die Wellenlängenmodulation an eine Änderung der Zustandsgröße anzupassen. Sondern die Anpassung der Wellenlängenmodulation erfolgt bezogen auf Änderungen im Absorptionssignal, die sich auf das erste und das zweite Derivativsignal und, daraus abgeleitet, auf die erste und die zweite Gaskonzentrationsmessgröße auswirken. Aus diesem Grund braucht die Zustandsgröße nicht mittels eines gesonderten Sensors erfasst zu werden.

Letztlich erfolgt die Anpassung der Wellenlängenmodulation auch bei dem erfindungsgemäßen Verfahren in Reaktion auf eine Änderung der Zustandsgröße. Allerdings wird diese Änderung anhand des ohnehin gemessenen Absorptionssignals - nämlich über das Größenverhältnis zweier Gaskonzentrationsmessgrößen, die aus Derivativsignalen des Absorptionssignals abgeleitet sind - festgestellt und nicht durch gesonderte Messung der Zustandsgröße. Das genannte Größenverhältnis ersetzt insofern die Zustandsgröße als Regelgröße für die Anpassung.

Insbesondere kann die Anpassung der Wellenlängenmodulation fortlaufend, das heißt im Sinne einer kontinuierlichen Regelung, erfolgen. Demzufolge wird der jeweils vorliegende Istwert des Größenverhältnisses zwischen der ersten und der zweiten Gaskonzentrationsmessgröße fortlaufend mit einem als Sollwert vorgegebenen Größenverhältnis verglichen. Bei einer Abweichung des Istwerts vom Sollwert wird die Wellenlängenmodulation nach bekannten Regelprinzipien derart angepasst, dass die Korrektur der Abweichung entgegenwirkt, um die Abweichung möglichst weitgehend zu kompensieren. Auf diese Weise wird das tatsächliche Größenverhältnis im Wesentlichen auf dem vorgegebenen Sollwert konstant gehalten. Der Sollwert kann dabei von außen vorgegeben sein oder aber innerhalb des Verfahrens selbst ermittelt werden, beispielsweise durch Nachschlagen in einer Tabelle und/oder in Abhängigkeit von einer Zustandsgröße des Gases oder sonstigen Parametern der Messung.

Bei dem erfindungsgemäßen Verfahren wird insbesondere ausgenutzt, dass sich eine Änderung der Zustandsgröße des Gases auf zwei verschiedene Derivativsignale desselben Absorptionssignals unterschiedlich auswirken kann. Daher kann durch eine kombinierte Betrachtung der Information aus zwei verschiedenen Derivativsignalen (dem ersten Derivativsignal und dem zweiten Derivativsignal) der Einfluss der Zustandsgröße auf die Messung abgeleitet werden. Diese kombinierte Betrachtung erfolgt gerade durch die Bildung des Größenverhältnisses. Würde eine Gaskonzentrationsmessgröße direkt als die konstant zu haltende Regelgröße verwendet, könnte aus ihr keine Information mehr über die Gaskonzentration gewonnen werden, da auch diese Information "weggeregelt" würde. Dadurch aber, dass ein Größenverhältnis zweier Gaskonzentrationsmessgrößen konstant gehalten wird, kann spezifisch der Einfluss der Zustandsgröße "weggeregelt" werden, während die Information über die Gaskonzentration erhalten bleibt und aus der ersten, der zweiten oder einer sonstigen Gaskonzentrationsmessgröße gewonnen werden kann.

Das Anpassen der Wellenlängenmodulation kann verschiedene Anpassungen umfassen und auf verschiedene Weise erfolgen. Insbesondere handelt es sich bei der Anpassung der Wellenlängenmodulation um eine Anpassung ihrer Amplitude. Alternativ oder zusätzlich kann auch die Frequenz der Wellenlängenmodulation angepasst werden.

Durch das erfindungsgemäße Verfahren kann die Wellenlängenmodulation trotz in Abhängigkeit von Zustandsgrößen des Gases veränderlicher Absorptionslinienformen kontinuierlich optimiert werden. Diese Optimierung der Wellenlängenmodulation hat den zusätzlichen Vorteil, dass auch eine Kalibrierung der Messung auf eigene Eigenschaften der Strahlungsquelle, z.B. des Laser, ausbleiben kann, da Veränderungen dieser Eigenschaften im Rahmen des erfindungsgemäßen Verfahrens weitgehend kompensiert werden können. Zwar kann die Strahlungsquelle nämlich bezüglich der tatsächlich ausgesandten Strahlung Abweichungen von Vorgabewerten aufweisen. Diese Abweichungen können jedoch im Rahmen des erfindungsgemäßen Verfahrens weitgehend kompensiert werden.

Gemäß einer vorteilhaften Ausführungsform wird/werden das erste und/ oder das zweite Derivativsignal in Abhängigkeit von einer Intensität der Strahlung oder einer Intensität des Absorptionssignals normiert. Dabei kann die Normierung insbesondere proportional zu der Intensität erfolgen. Die Intensität kann beispielsweise als Teil des Absorptionssignals oder gesondert davon als die Intensität der, etwa mittels des Detektors eines Spektrometers, empfangenen Strahlung gemessen werden.

Vorzugsweise umfasst die zumindest eine Zustandsgröße des Gases, an deren Änderung die Wellenlängenmodulation angepasst wird, einen Druck und/oder einen Fremdgaseinfluss des Gases. Beispielsweise kann das konstant zu haltende Größenverhältnis so gewählt sein, dass die Abhängigkeit der Messung vom Druck des Gases und/oder von einem Fremdgaseinfluss des Gases kompensiert wird. Wenn die Zustandsgröße zumindest den Druck des Gases umfasst, kann vorteilhafterweise auf einen Drucksensor zur Bestimmung des Drucks des Gases für eine nachträgliche Druckkorrektur der gemessenen Daten verzichtet werden. Wenn die Zustandsgröße zumindest einen Fremdgaseinfluss des Gases umfasst, braucht außerdem die Verbreiterung des Absorptionssignals aufgrund gegebenenfalls unbekannter Fremdgasanteile in der untersuchten Probe nicht gesondert bei der Auswertung der Messung berücksichtigt zu werden.

Bei einer vorteilhaften Weiterbildung wird die zumindest eine erste Gaskonzentrationsmessgröße und/oder die zumindest eine zweite Gaskonzentrationsmessgröße aus einer Höhe eines Extremums, aus einem Abstand zwischen einem Maximum und einem Minimum, aus einer Breite oder aus einer Fläche des Derivativsignals abgeleitet. Bei der Höhe eines Extremums kann es sich beispielsweise um die Höhe eines zentralen Maximums bei einer Absorptionswellenlänge des Gases handeln. Wenn es sich bei dem jeweiligen Derivativsignal um eines handelt, das einer geradzahligen Ableitung des Absorptionssignals entspricht (2f, 4f, usw.), so weist dieses Signal in der Regel ein dominierendes Maximum bei der zentralen Wellenlänge der jeweiligen Absorptionslinie des Gases und symmetrisch zu beiden Seiten dieses Maximums jeweils ein Minimum auf. Als der genannte Abstand kann dann der wertmäßige Abstand des zentralen Maximums von einem der beiden Minima oder von einem Mittelwert der beiden Minima herangezogen werden. Derivativsignale, die ungeradzahligen Ableitungen des Absorptionssignals entsprechen (1f, 3f, usw.), sind in der Regel punktsymmetrisch zu der zentralen Wellenlänge der jeweiligen Absorptionslinie und weisen einen Nulldurchgang bei der zentralen Wellenlänge, ein dazu benachbartes Maximum auf der einen Seite sowie ein dazu benachbartes Minimum auf der anderen Seite des Nulldurchgangs auf. In diesem Fall kann der wertmäßige Abstand dieses Maximums und dieses Minimums für die Bestimmung des genannten Abstands herangezogen werden. Bei der genannten Breite handelt es sich vorzugsweise um eine Halbwertsbreite eines Extremums des jeweiligen Derivativsignals oder um einen Abstand zwischen zwei Extrema, zwischen zwei Nulldurchgängen oder zwischen einem Extremum und einem Nulldurchgang dieses Derivativsignals. Zur Bestimmung der Breite können also im Wesentlichen alle markanten und eindeutig identifizierbaren Punkte des Derivativsignals herangezogen werden, die es ermöglichen, den Grad zu bestimmen, um den die Absorptionslinie durch verschiedene mögliche Einflüsse verbreitert ist. Eine Fläche des jeweiligen Derivativsignals ist beispielsweise eine zwischen der x-Achse und dem Derivativsignal eingeschlossenen Fläche, wobei die Fläche auf einen Wellenlängenbereich beispielsweise zwischen zwei Nulldurchgängen beschränkt sein kann und wobei Flächenanteile unterhalb der x-Achse von Flächenanteilen oberhalb der x-Achse abgezogen oder zu diesen hinzugezählt werden können.

Weiterhin ist es vorteilhaft, wenn das im Wesentlichen konstant zu haltende Größenverhältnis in Abhängigkeit von einem Druckbereich des Gases festgelegt wird. Beispielsweise kann das konstant zu haltende Größenverhältnis für vergleichsweise hohe Drücke auf einen ersten Wert festgelegt werden und für vergleichsweise niedrige Drücke auf einen zweiten Wert festgelegt werden, aus denen ausgewählt werden kann. Es sind aber auch feinere Abstufungen bis hin zu einem kontinuierlichen Zusammenhang zwischen dem Größenverhältnis und dem Druckbereich möglich. Der Druckbereich kann dabei von außen vorgegeben oder geschätzt werden. Dabei geht es nicht darum, den genauen Druck zu messen, sondern lediglich einen Bereich zu bestimmen, in dem der tatsächliche Druck zumindest mit einiger Wahrscheinlichkeit liegt. Auch wenn grundsätzlich verschiedene Größenverhältnisse unabhängig von einem jeweiligen Druckbereich als Regelgröße verwendet werden könnten, können abhängig von dem Druckbereich manche Größenverhältnisse geeigneter sein als andere, den Einfluss der Zustandsgröße in diesem Druckbereich zu kompensieren.

Vorzugsweise wird das im Wesentlichen konstant zu haltende Größenverhältnis derart festgelegt, dass die in dieses Größenverhältnis eingehende erste Gaskonzentrationsmessgröße im Wesentlichen maximal ist. Grundsätzlich kann das Ziel, den Einfluss der zumindest einen Zustandsgröße auf die Messung in den Messdaten durch Anpassung der Wellenlängenmodulation zu kompensieren, mit verschiedenen Größenverhältnissen als jeweiligem Sollwert einer Regelung erreicht werden. Es ist jedoch vorteilhaft, ein solches Größenverhältnis konstant zu halten, bei dem zumindest eine (die erste) der Gaskonzentrationsmessgrößen, insbesondere in dem zu erwartenden Druckbereich, besonders groß ist. Auf diese Weise weist zumindest diese Gaskonzentrationsmessgröße ein besonders gutes Signal-zu-Rausch-Verhältnis auf, während das Signal-zu-Rausch-Verhältnis der anderen Gaskonzentrationsmessgröße schlechter sein kann. Da ein gleichzeitiges Optimieren des Signal-zu-Rausch-Verhältnisses der ersten und der zweiten Gaskonzentrationsmessgröße nicht grundsätzlich möglich ist, wird gemäß dieser Weiterbildung das konstant zu haltende Größenverhältnis so gewählt, dass zumindest eine Gaskonzentrationsmessgröße maximal wird und daher ein optimiertes Signal-zu-Rausch-Verhältnis aufweist. Diese rauscharme Gaskonzentrationsmessgröße kann dann vorteilhafterweise für das Bestimmen der Konzentration und/oder Zusammensetzung des Gases herangezogen werden, während die andere in das Größenverhältnis eingehende Gaskonzentrationsmessgröße im Gegensatz dazu kein optimiertes Signal-zu-Rausch-Verhältnis aufweist und daher vorzugsweise nicht für die Konzentrationsbestimmung genutzt wird. Die Regelung auf ein konstantes Größenverhältnis wird im Wesentlichen nicht negativ dadurch beeinflusst, dass eine Gaskonzentrationsmessgröße gezielt rauschoptimiert wird, während in Kauf genommen wird, dass die andere Gaskonzentrationsmessgröße ein schlechteres Signal-zu-Rausch-Verhältnis aufweist.

Gemäß einer Weiterbildung wird/werden die Konzentration und/oder die Zusammensetzung des Gases aus der ersten Gaskonzentrationsmessgröße unter Berücksichtigung zumindest einer Kalibrationsfunktion bestimmt, die in Abhängigkeit von dem im Wesentlichen konstant zu haltenden Größenverhältnis festgelegt wird. Insbesondere um auch solche verfälschenden Einflüsse auf die Messung zu kompensieren, die nicht durch die Anpassung der Wellenlängenmodulation kompensiert werden, kann eine Kalibrationsfunktion vorgesehen sein, die beim Bestimmen der Konzentration und/oder Zusammensetzung des Gases aus der ersten Gaskonzentrationsmessgröße zusätzlich angewandt wird. Bei einem herkömmlichen Verfahren würde diese Kalibrationsfunktion die einzige Kompensation verfälschender Einflüsse auf die Messung darstellen. Insbesondere würde die Kalibrationsfunktion auch die Einflüsse derjenigen zumindest einen Zustandsgröße berücksichtigen müssen, deren Einfluss aufgrund des erfindungsgemäßen Verfahrens in der ersten Gaskonzentrationsmessgröße eliminiert ist. Bei Anwendung des erfindungsgemäßen Verfahrens braucht die Kalibrationsfunktion also vorteilhafterweise nur eine geringere Zahl verfälschender Einflüsse zu kompensieren und kann daher wesentlich weniger komplex als eine herkömmliche Kalibrationsfunktion sein. Beispielsweise kann die Kalibrationsfunktion eine Funktion der zu berücksichtigenden Zustandsgrößen des Gases sein.

Je mehr Zustandsgrößen zu berücksichtigen sind, desto mehr Dimensionen weist die Kalibrationsfunktion auf. Durch das erfindungsgemäße Verfahren kann die Dimensionalität der Kalibrationsfunktion jedoch verringert werden. Beispielsweise kann anstelle einer Kalibrationsfunktion, die den Druck, einen Fremdgaseinfluss und die Temperatur des Gases berücksichtigt, eine Kalibrationsfunktion vorgesehen sein, in der lediglich die Temperatur berücksichtigt zu werden braucht. Während für die Bestimmung einer Kalibrationsfunktion, die den Druck, den Fremdgaseinfluss und die Temperatur berücksichtigt, aufwändige Testmessungen bei verschiedenen Drücken, Fremdgaseinflüssen und Temperaturen durchgeführt werden müssen, lässt sich eine Kalibrationsfunktion, die lediglich die Temperatur berücksichtigt, auch rechnerisch bestimmen, da der Temperaturzusammenhang ein rein physikalischer, bekannter Zusammenhang ist. Somit wird durch das erfindungsgemäße Verfahren auch die weitere Kalibration der gemessenen Daten vereinfacht. Anstelle einer Fläche oder Hyperfläche in einem mehrdimensionalen Raum kann die Kalibrationsfunktion z.B. eine einfache, insbesondere von lediglich einem oder nur wenigen Parametern abhängige, Kalibrationskurve sein.

Dadurch, dass die Kalibrationsfunktion zudem in Abhängigkeit von dem im Wesentlichen konstant zu haltenden Größenverhältnis festgelegt wird, ist die Kalibrationsfunktion besonders gut geeignet, gerade diejenigen verfälschenden Anteile des Messsignals zu kompensieren, die durch das konstant gehaltene Größenverhältnis nicht kompensiert werden. Insbesondere können für verschiedene Größenverhältnisse bereits vor einer jeweiligen Messung entsprechende Kalibrationsfunktionen bestimmt werden. In Abhängigkeit davon, welches Größenverhältnis für die Messung (z.B. in Abhängigkeit von einem Druckbereich) ausgewählt wird, kann dann eine passende Kalibrationsfunktion einfach nachgeschlagen und für das Bestimmen der Konzentration und/oder Zusammensetzung des Gases berücksichtigt werden.

Bei einer Weiterbildung wird/werden die Konzentration und/oder Zusammensetzung des Gases aus der ersten Gaskonzentrationsmessgröße unter Berücksichtigung zumindest einer Kalibrationsfunktion bestimmt, wobei lediglich derartige Kalibrationsfunktionen berücksichtigt werden, durch die sich Fremdgaseinflüsse und/oder Einflüsse des Drucks auf das Absorptionssignal nicht kompensieren lassen. Insbesondere werden solche Kalibrationsfunktionen berücksichtigt, durch die sich zumindest Einflüsse der Temperatur und/oder von Geräteeigenschaften auf das Absorptionssignal im Wesentlichen kompensieren lassen. Fremdgaseinflüsse und/oder Einflüsse des Drucks des Gases lassen sich durch das erfindungsgemäße Verfahren über die Anpassung der Wellenlängenmodulation bereits bei der Messung kompensieren. Somit kann die Kalibrationsfunktion vorteilhafterweise auf die Berücksichtigung anderer Einflüsse, wie etwa von Einflüssen der Temperatur und/oder von Geräteeigenschaften, beschränkt sein. Dabei ist der Einfluss der Temperatur auf das Absorptionssignal ein bekannter, rein physikalischer Zusammenhang, der auf einfache Weise mittels einer Kalibrationsfunktion berücksichtigt werden kann.

Weiterhin ist es vorteilhaft, wenn die Konzentration und/oder Zusammensetzung des Gases aus zumindest einer aus dem ersten Derivativsignal abgeleiteten ersten Gaskonzentrationsmessgröße ohne Berücksichtigung einer aus dem zweiten Derivativsignal abgeleiteten Gaskonzentrationsmessgröße bestimmt wird/werden. Idealerweise wird die Konzentration des Gases aus zumindest einer Gaskonzentrationsmessgröße mit möglichst maximalem Signal-zu-Rausch-Verhältnis bestimmt. Da erfindungsgemäß das Größenverhältnis zwischen der ersten Gaskonzentrationsmessgröße und der zweiten Gaskonzentrationsmessgröße im Wesentlichen konstant gehalten wird, kann jedoch nicht das Signal-zu-Rausch-Verhältnis sowohl der ersten Gaskonzentrationsmessgröße als auch der zweiten Gaskonzentrationsmessgröße gleichzeitig maximiert werden. Es ist daher vorteilhaft, wenn das Bestimmen der Konzentration und/oder Zusammensetzung des Gases lediglich auf einem der Derivativsignale beruht, nämlich vorzugsweise demjenigen mit dem besseren Signal-zu-Rausch-Verhältnis. Insbesondere in Verbindung mit einer Ausführungsform, bei der das Größenverhältnis derart festgelegt wird, dass die erste Gaskonzentrationsmessgröße im Wesentlichen maximal ist, weist die erste Gaskonzentrationsmessgröße in der Regel das bessere Signal-zu-Rausch-Verhältnis auf, so dass bevorzugt nur diese Gaskonzentrationsmessgröße für das Bestimmen der Konzentration und/oder Zusammensetzung des Gases herangezogen wird.

Weiterhin ist es vorteilhaft, wenn die Konzentration und/ oder Zusammensetzung des Gases in Abhängigkeit von dem Druck des Gases aus einer ersten Gaskonzentrationsmessgröße oder aus zwei ersten Gaskonzentrationsmessgrößen bestimmt wird/werden. Mit anderen Worten muss für das Bestimmen der Konzentration und/oder Zusammensetzung des Gases nicht stets lediglich eine einzige Gaskonzentrationsmessgröße verwendet werden, sondern es können auch zwei erste Gaskonzentrationsmessgrößen herangezogen werden. Die Entscheidung darüber, ob eine oder zwei erste Gaskonzentrationsmessgrößen verwendet werden, ist von dem Druck oder einem (geschätzten oder auf andere Weise bestimmten) Druckbereich des Gases abhängig. Die zwei ersten Gaskonzentrationsmessgrößen sind, da sie "erste" Gaskonzentrationsmessgrößen sind, beide aus demselben (ersten) Derivativsignal abgeleitet. Beispielsweise kann es sich bei einer der zwei ersten Gaskonzentrationsmessgrößen um eine Signalhöhe und bei der anderen um eine Signalbreite des ersten Derivativsignals handeln.

Das Berücksichtigen zweier erster Gaskonzentrationsmessgrößen ist insbesondere dann für eine korrekte Bestimmung der Konzentration und/oder Zusammensetzung des Gases nützlich und erforderlich, wenn das Absorptionssignal von einer idealen Lorentz-Kurve abweicht und verbreitert ist, das heißt wesentliche Anteile einer Gauß-Kurve aufweist. Bei hohen Drücken dominiert der Anteil der Lorentz-Kurve die Absorptionslinienform. Mit niedrigeren Drücken nimmt der Anteil der Gauß-Kurve zu, so dass es sein kann, dass eine einzelne Gaskonzentrationsmessgröße für die Bestimmung der Konzentration und/oder Zusammensetzung des Gases nicht mehr ausreicht. Daher ist es besonders bevorzugt, wenn die Konzentration und/oder Zusammensetzung des Gases bei einem Druck in einem hohen Druckbereich aus einer ersten Gaskonzentrationsmessgröße und bei einem Druck in einem niedrigen Druckbereich aus zwei ersten Gaskonzentrationsmessgrößen bestimmt wird/werden.

Ein Spektrometer kann ein jeweiliges Verfahren weitestgehend automatisiert oder teilautomatisiert ausführen, wobei im letztgenannten Fall ein Anwender, etwa mittels einer Anzeigeeinrichtung des Spektrometers durch einzelne Schritte des Verfahrens geleitet werden kann. Das Spektrometer kann ferner eine Recheneinheit, beispielsweise mit einem Mikroprozessor, umfassen, auf der das erfindungsgemäße Verfahren oder Teile desselben als Routinen gespeichert und ausführbar sind.

Weiterhin kann das Spektrometer zum Aussenden der Strahlung eine oder mehrere Strahlungsquellen, insbesondere in Form jeweiliger Laser, vorzugsweise Diodenlaser, umfassen. Der Einsatz eines Lasers ermöglicht es, auf einfache Weise Strahlung hoher Intensität mit einer scharf definierten Wellenlänge zu erhalten. Beispielsweise ist dieser Laser zudem in seiner Wellenlänge verstellbar. Hierzu eignen sich insbesondere Diodenlaser, etwa nach Art eines Vertical Cavity Diodenlasers oder eines Distributed Feedback Diodenlasers. Es sind aber auch andere Strahlungsquellen denkbar, etwa Quantenkaskadenlaser, Interbandkaskadenlaser, Festkörperlaser oder Gaslaser. Die Verwendung mehrerer Strahlungsquellen kann beispielsweise dazu dienen, einen größeren Wellenlängenbereich abdecken zu können.

Insbesondere kann zur wellenlängenabhängigen Messung des Absorptionssignals die Wellenlänge einer jeweiligen Strahlungsquelle des Spektrometers präzise eingestellt und idealerweise kontinuierlich über einen großen Wellenlängenbereich variiert werden. Um Strahlung einer scharfen Wellenlänge zu erhalten, können beispielsweise Filter oder Gitter vor einer herkömmlichen Strahlungsquelle eingesetzt werden.

Zudem kann das Spektrometer zum Messen des Absorptionssignals einen Detektor umfassen, bei dem es sich beispielsweise um einen Silizium-Detektor, einen Indium-Gallium-Arsenid-Detektor, einen Quecksilber-Cadmium-Tellurid-Detektor, einen Germanium-Detektor oder einen Indium-Arsenid-Detektor handeln kann.

Als Messzellen des Detektors, durch die insbesondere die optische Wegstrecke, innerhalb derer die Strahlung von dem Gas absorbiert wird, definiert wird, kommen insbesondere White-Zellen und Herriott-Zellen in Frage.

Das Spektrometer kann zudem zum Umwandeln des Absorptionssignals einen phasensensitiven Verstärker oder eine zumindest zur Fourier-Transformation des Absorptionssignals geeignete Recheneinheit umfassen. Bei der Recheneinheit kann es sich insbesondere um eine Recheneinheit handeln, die auch zur Steuerung des Spektrometers verwendet wird. Der phasensensitive Verstärker ist etwa ein Lock-In-Verstärker, der analog oder digital ausgebildet sein kann. Mittels eines solchen Verstärkers oder einer solchen zur Fourier-Transformation geeigneten Recheneinheit können zu einem Absorptionssignal auf einfache Weise jeweilige Derivativsignale erzeugt werden.

Im Folgenden wird die Erfindung unter Bezugnahme auf die beiliegenden schematischen Figuren erläutert.
- Fig. 1: zeigt in einer schematischen Darstellung eine Ausführungsform eines Spektrometers zur Ausführung des Verfahrens gemäß der Erfindung.
- Fig. 2: zeigt in einem Flussdiagramm den Ablauf einer Ausführungsform des erfindungsgemäßen Verfahrens.

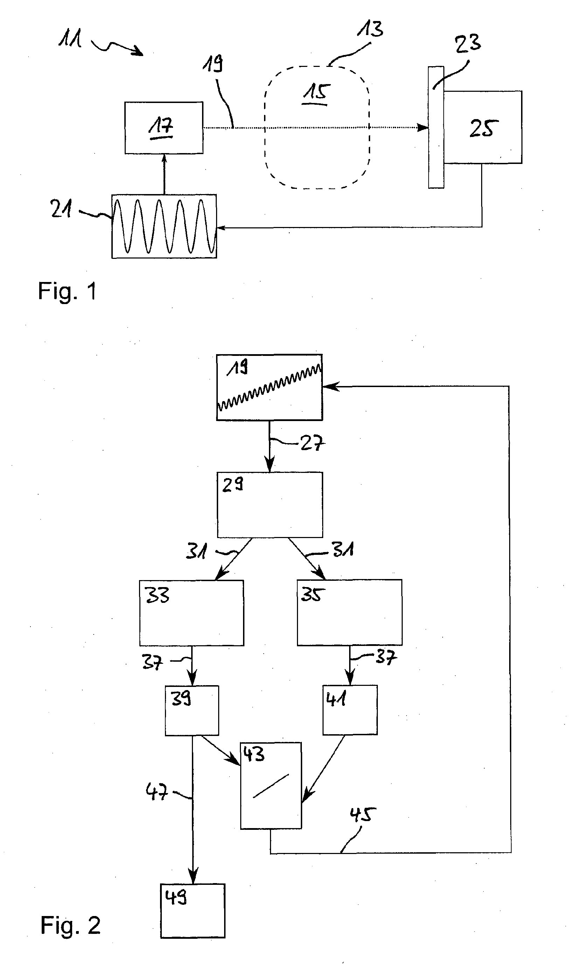

Das in Fig. 1 schematisch dargestellte Spektrometer 11 weist einen Messraum in Form einer Messzelle 13 (gestrichelt) auf, in der eine Probe eines zu untersuchenden Gases 15 enthalten ist bzw. durch die eine Probe des Gases 15 strömen kann. Mittels eines Lasers 17 als der Strahlungsquelle des Spektrometers 11 wird eine Strahlung 19 (gepunktet) erzeugt und ausgesandt. Die von dem Laser 17 ausgesandte Strahlung 19 ist im Wesentlichen monochromatisch. Die Wellenlänge der Strahlung 19 lässt sich jedoch über einen gewissen Wellenlängenbereich gleichmäßig verstellen.

Das kontinuierliche Durchlaufen des Wellenlängenbereichs wird von einer Wellenlängenmodulation überlagert. Bei der gezeigten Ausführungsform ist dazu ein Modulator 21 in Form eines Funktionengenerators vorgesehen, der eine im Wesentlichen harmonische Modulation an den Laser 17 ausgibt. Gemäß dem Signal, das der Laser 17 von dem Modulator 21 erhält, moduliert der Laser 17 die von ihm ausgesandte Strahlung 19. Alternativ kann der Modulator 21 selbst bereits ein kontinuierliches Durchlaufen eines Bereichs mit einer im Wesentlichen harmonischen Modulation überlagern, so dass der Laser 17 das Signal des Modulators 21 direkt als Steuersignal für die Wellenlänge der ausgesandten Strahlung 19 verwenden kann. Insbesondere kann der Modulator 21 in dem Laser 17 integriert sein.

Die Strahlung 19 durchläuft die Messzelle 13 und wird dabei von dem Gas 15 wellenlängenabhängig absorbiert. Anschließend trifft die Strahlung 19 auf einen Detektor 23 des Spektrometers 11, der die Intensität der Strahlung 19 in Abhängigkeit von der Zeit erfasst. Da für jeden Zeitpunkt bekannt ist, welche Wellenlänge der Laser 17 zu diesem Zeitpunkt ausgesandt hat, kann aus diesem Zusammenhang dann die gemessene Intensität der Strahlung 19 in Bezug zu der jeweiligen Wellenlänge der ausgesandten Strahlung 19 gebracht werden. Letztlich wird auf diese Weise ein Absorptionssignal 29 (in Fig. 1 nicht dargestellt) aus der Absorption der Strahlung 19 durch das Gas 15 als Funktion der Wellenlänge der Strahlung 19 gemessen, das anschließend in einer Recheneinheit 25 des Spektrometers 11 ausgewertet wird (vgl. Fig. 2). Die Recheneinheit 25 ist mit dem Modulator 21 verbunden, um abhängig von aus dem gemessenen Absorptionssignal 29 abgeleiteten Größen die Wellenlängenmodulation der Strahlung 19 anpassen zu können. Auf diese Weise ergibt sich ein geschlossener Regelkreis, der vorzugsweise eine große Zeitkonstante aufweist.

In Fig. 2 ist der Ablauf einer Ausführungsform des Verfahrens als ein Flussdiagramm dargestellt, das ausgehend von der ausgesandten Strahlung 19 im Folgenden beschrieben wird. Die Wellenlänge der Strahlung 19 durchläuft im Wesentlichen kontinuierlich einen Wellenlängenbereich, wobei sie von einer im Wesentlichen harmonischen Wellenlängenmodulation überlagert wird. Der Schritt des Messens 27 wandelt die ausgesandte Strahlung 19, nachdem sie die Messzelle 13 mit dem Gas 15 durchlaufen hat, zu einem Absorptionssignal 29, das die Intensität der Strahlung 19 beschreibt. Die Absorption der Strahlung 19 durch das Gas 15 wirkt dabei wie eine Übertragungsfunktion, die die ausgesandte Strahlung 19 in das Absorptionssignal 29 der auf den Detektor 23 auftreffenden Strahlung 19 überträgt. Entsprechend zu der Wellenlängenmodulation der Strahlung 19 weist daher auch das Absorptionssignal 29 eine zeitliche Modulation auf.

Mittels einer Fourier-Zerlegung, die in der Recheneinheit 25 ausgeführt werden kann, werden die Anteile des Absorptionssignals 29 bei verschiedenen Vielfachen der Modulationsfrequenz bestimmt. Auf diese Weise wird das Absorptionssignal 29 in den Schritten 31 in ein erstes Derivativsignal 33 und in ein zweites Derivativsignal 35 umgewandelt. Dabei entspricht in der gezeigten Ausführung das erste Derivativsignal 33 dem 2f-Signal und das zweite Derivativsignal 35 dem 3f-Signal des Absorptionssignals 29. Aus dem ersten Derivativsignal 33 und dem zweiten Derivativsignal 35 wird in einem anschließenden Schritt 37 eine erste Gaskonzentrationsmessgröße 39 bzw. eine zweite Gaskonzentrationsmessgröße 41 abgeleitet. Bei diesen Gaskonzentrationsmessgrößen 39, 41 handelt es sich z.B. jeweils um einen Abstand zwischen einem Maximum und einem dazu benachbarten Minimum des ersten bzw. zweiten Derivativsignals im Bereich einer Absorptionslinie des gemessenen Gases 15.

Anschließend wird das Größenverhältnis 43 zwischen der ersten Gaskonzentrationsmessgröße 39 und der zweiten Gaskonzentrationsmessgröße 41 ermittelt. Dies kann beispielsweise durch einfache Quotientenbildung erfolgen, wobei die einzelnen Gaskonzentrationsmessgrößen 39, 41 zuvor gewichtet oder auf eine sonstige Weise korrigiert werden können. Mit dem Ziel, dieses Größenverhältnis 43 konstant zu halten bzw., sofern es eine Abweichung von dem konstant zu haltenden Sollwert aufweist, auf den Sollwert zurückzubringen, erfolgt dann das Anpassen 45 der Wellenlängenmodulation der Strahlung 19. Die dazu vorgesehene Regelungseinrichtung ist in den Figuren nicht dargestellt und kann beispielsweise in der Recheneinheit 25 integriert sein. Der konstant zu haltende Sollwert kann insbesondere in Abhängigkeit von einem Druckbereich, in dem die Messung 27 stattfindet, ausgewählt worden sein.

Aus der ersten Gaskonzentrationsmessgröße 39 kann als abschließender Schritt 47 des Verfahrens die Konzentration und/oder Zusammensetzung 49 des Gases 15 bestimmt werden. Das gezeigte Flussdiagramm entspricht dabei einer Messung in einem eher hohen Druckbereich, bei dem für die Bestimmung 47 der Konzentration und/oder Zusammensetzung 49 des Gases 15 eine einzige erste Gaskonzentrationsmessgröße 39 ausreicht. Bei einer Messung in einem eher niedrigen Druckbereich können in dem Schritt 37 zusätzlich zu der ersten Gaskonzentrationsmessgröße 39 und der zweiten Gaskonzentrationsmessgröße 41 auch weitere erste Gaskonzentrationsmessgröße 39' (nicht dargestellt) aus dem ersten Derivativsignal 33 abgeleitet werden. Aus den beiden ersten Gaskonzentrationsmessgrößen 39, 39', die z.B. eine Signalhöhe bzw. eine Signalbreite des Derivativsignals 33 sein können, kann dann auch bei niedrigen Drücken die Konzentration und/oder Zusammensetzung 49 des Gases 15 zuverlässig bestimmt werden.

### Bezugszeichenliste

- 11: Spektrometer
- 13: Messzelle
- 15: Gas
- 17: Laser
- 19: Strahlung
- 21: Modulator
- 23: Detektor
- 25: Recheneinheit
- 27: Schritt des Messens
- 29: Absorptionssignal
- 31: Schritt des Umwandelns
- 33: erstes Derivativsignal
- 35: zweites Derivativsignal
- 37: Schritt des Ableitens
- 39: erste Gaskonzentrationsmessgröße
- 41: zweite Gaskonzentrationsmessgröße
- 43: Größenverhältnis
- 45: Schritt des Anpassens
- 47: Schritt des Bestimmens
- 49: Konzentration und/oder Zusammensetzung

## Patentansprüche

1. Verfahren zur Bestimmung einer Konzentration eines Gases (15) in einer Probe und/oder der Zusammensetzung eines Gases (15) mittels eines Spektrometers (11), umfassend die Schritte:
- Aussenden von Strahlung (19), deren Wellenlänge einen Wellenlängenbereich im Wesentlichen kontinuierlich durchläuft, wobei das kontinuierliche Durchlaufen des Wellenlängenbereichs durch eine, vorzugsweise im Wesentlichen harmonische, Wellenlängenmodulation überlagert wird;
- Messen (27) eines Absorptionssignals (29) aus der Absorption der Strahlung (19) durch das Gas (15) als Funktion der Wellenlänge der Strahlung (19);
- Umwandeln (31) des Absorptionssignals (29) in ein erstes Derivativsignal (33);
- Ableiten (37) zumindest einer ersten Gaskonzentrationsmessgröße (39) aus dem ersten Derivativsignal (33);
- Umwandeln (31) des Absorptionssignals (29) in ein zweites Derivativsignal (35);
- Ableiten (37) zumindest einer zweiten Gaskonzentrationsmessgröße (41) aus dem zweiten Derivativsignal (35); und
- Bestimmen (47) der Konzentration und/oder Zusammensetzung (49) des Gases (15) aus zumindest der ersten Gaskonzentrationsmessgröße (39);
**dadurch gekennzeichnet,**
**dass** die Wellenlängenmodulation, vorzugsweise fortlaufend, derart in Reaktion auf eine Änderung zumindest einer Zustandsgröße des Gases (15) angepasst wird (45), dass ein Größenverhältnis (43) zwischen der ersten Gaskonzentrationsmessgröße (39) und der zweiten Gaskonzentrationsmessgröße (41) im Wesentlichen konstant gehalten wird.

2. Verfahren nach Anspruch 1,
**dadurch gekennzeichnet,**
**dass** das erste Derivativsignal (33) und/oder das zweite Derivativsignal (35) in, insbesondere proportionaler, Abhängigkeit von einer Intensität der Strahlung oder einer Intensität des Absorptionssignals (29) normiert wird/werden.

3. Verfahren nach Anspruch 1 oder 2,
**dadurch gekennzeichnet,**
**dass** die zumindest eine Zustandsgröße des Gases (15), an deren Änderung die Wellenlängenmodulation angepasst wird (45), einen Druck und/oder einen Fremdgaseinfluss des Gases (15) umfasst.

4. Verfahren nach zumindest einem der vorstehenden Ansprüche,
**dadurch gekennzeichnet,**
**dass** die zumindest eine erste Gaskonzentrationsmessgröße (39) aus einer Höhe eines Extremums, aus einem Abstand zwischen einem Maximum und einem Minimum, aus einer Breite oder aus einer Fläche des ersten Derivativsignals (33) abgeleitet wird.

5. Verfahren nach zumindest einem der vorstehenden Ansprüche,
**dadurch gekennzeichnet,**
**dass** die zumindest eine zweite Gaskonzentrationsmessgröße (41) aus einer Höhe eines Extremums, aus einem Abstand zwischen einem Maximum und einem Minimum, aus einer Breite oder aus einer Fläche des zweiten Derivativsignals (35) abgeleitet wird.

6. Verfahren nach zumindest einem der vorstehenden Ansprüche,
**dadurch gekennzeichnet,**
**dass** das im Wesentlichen konstant zu haltende Größenverhältnis (43) in Abhängigkeit von einem Druckbereich des Gases (15) festgelegt wird.

7. Verfahren nach zumindest einem der vorstehenden Ansprüche,
**dadurch gekennzeichnet,**
**dass** das im Wesentlichen konstant zu haltende Größenverhältnis (43) derart festgelegt wird, dass die in dieses Größenverhältnis (43) eingehende erste Gaskonzentrationsmessgröße (39) im Wesentlichen maximal ist.

8. Verfahren nach zumindest einem der vorstehenden Ansprüche,
**dadurch gekennzeichnet,**
**dass** die Konzentration und/oder Zusammensetzung (49) des Gases (15) aus der ersten Gaskonzentrationsmessgröße (39) unter Berücksichtigung zumindest einer Kalibrationsfunktion bestimmt wird/werden, die in Abhängigkeit von dem im Wesentlichen konstant zu haltenden Größenverhältnis (43) festgelegt wird.

9. Verfahren nach zumindest einem der vorstehenden Ansprüche,
**dadurch gekennzeichnet,**
**dass** die Konzentration und/oder Zusammensetzung (49) des Gases (15) aus der ersten Gaskonzentrationsmessgröße (39) unter Berücksichtigung zumindest einer Kalibrationsfunktion bestimmt wird/werden, wobei lediglich derartige Kalibrationsfunktionen berücksichtigt werden, durch die sich Einflüsse der Temperatur und/oder von Geräteeigenschaften auf das Absorptionssignal (29) im Wesentlichen kompensieren lassen, nicht aber Fremdgaseinflüsse und/oder Einflüsse des Druckes auf das Absorptionssignal (29).

10. Verfahren nach zumindest einem der vorstehenden Ansprüche,
**dadurch gekennzeichnet,**
**dass** die Konzentration und/oder Zusammensetzung (49) des Gases (15) aus zumindest einer aus dem ersten Derivativsignal (33) abgeleiteten ersten Gaskonzentrationsmessgröße (39) ohne Berücksichtigung einer aus dem zweiten Derivativsignal (35) abgeleiteten zweiten Gaskonzentrationsmessgröße (41) bestimmt wird/werden.

11. Verfahren nach zumindest einem der vorstehenden Ansprüche,
**dadurch gekennzeichnet,**
**dass** die Konzentration und/oder Zusammensetzung (49) des Gases (15) in Abhängigkeit von dem Druck des Gases (15) aus einer ersten Gaskonzentrationsmessgröße (39) oder aus zwei ersten Gaskonzentrationsmessgrößen (39), vorzugsweise bei einem Druck in einem hohen Druckbereich aus einer ersten Gaskonzentrationsmessgröße (39) und bei einem Druck in einem niedrigen Druckbereich aus zwei ersten Gaskonzentrationsmessgrößen (39), bestimmt wird/werden.

## Claims

1. A method of determining a concentration of a gas (15) in a sample and/or the composition of a gas (15) using a spectrometer (11), comprising the steps:
- transmitting radiation (19) whose wavelength substantially continuously passes through a wavelength range, wherein the continuous passing through of the wavelength range is overlaid by a wavelength modulation, preferably a substantially harmonic wavelength modulation;
- measuring (27) an absorption signal (29) from the absorption of the radiation (19) by the gas (15) as a function of the wavelength of the radiation (19);
- converting (31) the absorption signal (29) into a first derivative signal;
- deriving (37) at least one first measured gas concentration value (39) from the first derivative signal (33);
- converting (31) the absorption signal (29) into a second derivative signal (35);
- deriving (37) at least one second measured gas concentration value (41) from the second derivative signal (35); and
- determining (47) the concentration and/or the composition (49) of the gas (15) from at least the first measured gas concentration value (39),
**characterized in that**
the wavelength modulation is adapted (45), preferably continuously, such that in response to a change of at least one state variable of the gas (15) a ratio (43) between the first measured gas concentration value (39) and the second measured gas concentration value (41) is kept substantially constant.

2. A method in accordance with claim 1,
**characterized in that**
the first derivative signal (33) and/or the second derivative signal (35) is/are normed in dependence, in particular in proportional dependence, on an intensity of the radiation or on an intensity of the absorption signal (29).

3. A method in accordance with claim 1 or claim 2,
**characterized in that**
the at least one state variable of the gas (15) to whose change the wavelength modulation is adapted (45) comprises a pressure and/or an external gas influence of the gas (15).

4. A method in accordance with at least one of the preceding claims,
**characterized in that**
the at least one first measured gas concentration value (39) is derived from a level of an extreme, from a spacing between a maximum and a minimum, from a width or from an area of the first derivative signal (33).

5. A method in accordance with at least one of the preceding claims,
**characterized in that**
the at least one second measured gas concentration value (41) is derived from a level of an extreme, from a spacing between a maximum and a minimum, from a width or from an area of the second derivative signal (35).

6. A method in accordance with at least one of the preceding claims,
**characterized in that**
the ratio (43) to be kept substantially constant is fixed in dependence on a pressure range of the gas (15).

7. A method in accordance with at least one of the preceding claims,
**characterized in that**
the ratio (43) to be kept substantially constant is fixed such that the first measured gas concentration value (39) entering into this ratio (43) is substantially at a maximum.

8. A method in accordance with at least one of the preceding claims,
**characterized in that**
the concentration and/or the composition (49) of the gas (15) is/are determined from the first measured gas concentration value (39) while taking account of at least one calibration function which is fixed in dependence on the ratio (43) to be kept substantially constant.

9. A method in accordance with at least one of the preceding claims,
**characterized in that**
the concentration and/or the composition (49) of the gas (15) is/are determined from the first measured gas concentration value (39) while taking account of at least one calibration function, with only such calibration functions being taken into account by which influences of the temperature and/or of device properties on the absorption signal (29) can substantially be compensated, but not external gas influences and/or influences of the pressure on the absorption signal (29).

10. A method in accordance with at least one of the preceding claims,
**characterized in that**
the concentration and/or the composition (49) of the gas (15) is/are determined from at least one first measured gas concentration value (39) derived from the first derivative signal (33) without taking account of a second measured gas concentration value (41) derived from the second derivative signal (35).

11. A method in accordance with at least one of the preceding claims,
**characterized in that**
the concentration and/or the composition (49) of the gas (15) is/are determined in dependence on the pressure of the gas (15) from a first measured gas concentration value (39) or from two first measured gas concentration values (39), preferably from a first gas measured gas concentration value (39) at a pressure in a high pressure range and from two first measured gas concentration values (39) at a pressure in a low pressure range.

## Revendications

1. Procédé pour la détermination d'une concentration d'un gaz (15) dans un échantillon et/ou de la composition d'un gaz (15) au moyen d'un spectromètre (11), comprenant les étapes consistant à :
- émettre un rayonnement (19), dont la longueur d'onde parcourt sensiblement en continu une plage de longueurs d'onde, de sorte que le parcours continu de la plage de longueurs d'onde est superposé par une modulation de longueur d'onde, de préférence sensiblement harmonique ;
- mesurer (27) un signal d'absorption (29) à partir de l'absorption du rayonnement (19) par le gaz (15) en fonction de la longueur d'onde du rayonnement (19) ;
- convertir (31) le signal d'absorption (29) en un premier signal dérivatif (33) ;
- dériver (37) au moins une première grandeur de mesure (39) de la concentration de gaz à partir du premier signal dérivatif (33) ;
- convertir (31) le signal d'absorption (29) en un second signal dérivatif (35) ;
- dériver (37) au moins une seconde grandeur de mesure (41) de la concentration de gaz à partir du second signal dérivatif (35) ; et
- déterminer (47) la concentration et/ou la composition (49) du gaz (15) au moins à partir de la première grandeur de mesure (39) de la concentration de gaz ;
**caractérisé en ce que**
la modulation de longueur d'onde est adaptée (45), de préférence en permanence, en réaction à une modification d'au moins une grandeur d'état du gaz (15), de telle façon qu'une relation de grandeur (43) entre la première grandeur de mesure (39) et la seconde grandeur de mesure (41) de la concentration de gaz est maintenue sensiblement constante.

2. Procédé selon la revendication 1,
**caractérisé en ce que** le premier signal dérivatif (33) et/ou le second signal dérivatif (35) est/sont normalisé(s) en fonction, en particulier de manière proportionnelle, d'une intensité du rayonnement ou d'une intensité du signal d'absorption (29).

3. Procédé selon la revendication 1 ou 2,
**caractérisé en ce que** ladite au moins une grandeur d'état du gaz (15), à la variation de laquelle la modulation de longueur d'onde est adaptée (45), inclut une pression et/ou une influence du gaz (15) par un gaz étranger.

4. Procédé selon l'une au moins des revendications précédentes,
**caractérisé en ce que** ladite au moins une première grandeur de mesure (39) de la concentration de gaz est dérivée d'une hauteur d'une valeur extrême, d'une distance entre un maximum et un minimum, d'une largeur ou d'une surface du premier signal dérivatif (33).

5. Procédé selon l'une au moins des revendications précédentes,
**caractérisé en ce que** ladite au moins une seconde grandeur de mesure (41) de la concentration de gaz est dérivée de la hauteur d'une valeur extrême, d'une distance entre un maximum et un minimum, d'une largeur ou d'une surface du second signal dérivatif (35).

6. Procédé selon l'une au moins des revendications précédentes,
**caractérisé en ce que** la relation de grandeur (43) à maintenir sensiblement constante est fixée en fonction d'une plage de pression du gaz (15).

7. Procédé selon l'une au moins des revendications précédentes,
**caractérisé en ce que** la relation de grandeur (43) à maintenir sensiblement constante est fixée de telle manière que la première grandeur de mesure (39) de la concentration de gaz intervenant dans cette relation de grandeur (43) est sensiblement maximale.

8. Procédé selon l'une au moins des revendications précédentes,
**caractérisé en ce que** la concentration et/ou la composition (49) du gaz (15) est/sont déterminée(s) à partir de la première grandeur de mesure (39) de la concentration de gaz en tenant compte d'au moins une fonction de calibrage, qui est fixée en fonction de la relation de grandeur (43) à maintenir sensiblement constante.

9. Procédé selon l'une au moins des revendications précédentes,
**caractérisé en ce que** la concentration et/ou la composition (49) du gaz (15) est/sont déterminée(s) à partir de la première grandeur de mesure (39) de la concentration de gaz en tenant compte d'au moins une fonction de calibrage, dans lequel on tient compte uniquement de celles des fonctions de calibrage au moyen desquelles on peut sensiblement compenser des influences de la température et/ou des propriétés de l'appareillage sur le signal d'absorption (29) et non pas des influences dues à des gaz étrangers et/ou des influences de la pression sur le signal d'absorption (29).

10. Procédé selon l'une au moins des revendications précédentes,
**caractérisé en ce que** la concentration et/ou la composition (49) du gaz (15) est/sont déterminée(s) à partir d'au moins une première grandeur de mesure (39) de la concentration de gaz dérivée du premier signal dérivatif (33) sans tenir compte d'une seconde grandeur de mesure (41) de la concentration de gaz dérivée du second signal dérivatif (35).

11. Procédé selon l'une au moins des revendications précédentes,
**caractérisé en ce que** la concentration et/ou la composition (49) du gaz (15) est/sont déterminée(s) à partir d'une première grandeur de mesure (39) de la concentration de gaz ou à partir de deux premières grandeurs de mesure (39) de la concentration de gaz, de préférence à une pression dans une plage de pression élevée à partir d'une première grandeur de mesure (39) de la concentration de gaz et à une pression dans une plage de pression faible à partir de deux premières grandeurs de mesure (39) de la concentration de gaz.
